# EUROPÄISCHE PATENTSCHRIFT

(11) **EP 1 359 032 B1**
(45) Veröffentlichungstag und Bekanntmachung des Hinweises auf die Patenterteilung: **24.01.2007**
(21) Anmeldenummer: 03004164.4
(22) Anmeldetag: 26.02.2003
(51) Int. Cl.: B60G 9/02, B60G 5/00, B60K 17/04, B60T 1/06

(54) **Fahrantrieb für Lastkraftwagen**
Drive for truck
Entraînement pour camion

(30) Priorität: 29.04.2002 DE 20206821 U
(43) Veröffentlichungstag der Anmeldung: 05.11.2003
(73) Patentinhaber: Liebherr-Werk Biberach GmbH, 88400 Biberach an der Riss (DE)
(72) Erfinder: Mollhagen, Klaus-Peter, 87700 Memmingen (DE)
(74) Vertreter: Thoma, Michael

(56) Entgegenhaltungen:
- EP-A- 0 084 732
- WO-A-01/53141
- WO-A-92/04196
- DE-A- 1 755 126
- US-A- 3 897 843
- US-A- 4 010 830
- US-A- 4 040 312
- US-A1- 2002 045 510

## Beschreibung

Die vorliegende Erfindung betrifft einen Fahrantrieb für Lastkraftwagen, insbesondere Schüttgutkipper vom sogenannten Large Dump Truck-Typ, mit mehreren, eine angetriebene Radachse bildenden Räderpaaren, die jeweils von einer separaten Schwinge gelagert sind, die sich zwischen den Rädern des jeweiligen Räderpaares erstreckt und auf gegenüberliegenden Seiten zwei Radnaben trägt, an denen die Räder befestigbar sind, wobei für jedes Rad der Räderpaare ein Einzelradantrieb bestehend aus einem Elektromotor und einer Getriebestufe, die die Antriebsbewegung des Elektromotors auf die jeweilige Radnabe überträgt, vorgesehen ist.

Die sogenannten Large Dump Trucks werden überwiegend in Gewinnungsbetrieben für den Transport der abgebauten Mineralien und Erze eingesetzt. Diese Schüttgutkipper werden in einer Größe von mehreren Hundert Tonnen Eigengewicht und Nutzlast hergestellt, so dass spezielle Fahrantriebe notwendig sind, um die entsprechenden, ungeheueren Kräfte und Antriebsbedingungen zu beherrschen.

Ein Large Dump Truck mit einem Einzelradantrieb der eingangs genannten Art ist beispielsweise aus der WO 92/04196 bekannt. Die Hinterachse dieses Large Dump Trucks wird von vier Rädern gebildet, die paarweise zusammengefasst sind und an zwei am Fahrzeugrahmen beweglich gelagerten Schwingen montiert sind. Die sich zwischen den Räderpaaren erstreckenden Schwingen tragen rechts und links ein Paar Radnaben, auf denen die Räder montiert sind. Dabei ist jedem der Räder ein separater Elektromotor zugeordnet, so dass die Räder einzeln auch mit unterschiedlichen Drehzahlen angetrieben werden können, insbesondere um bei engen Kurvenfahrten ein Radieren der Räder zu verhindern. Aus der US 2002/0045510 A1 ist weiterhin ein Radantrieb für Gabelstapler, Wald- und Landmaschinen bekannt, bei dem eine Einzelradbremse auf der Außenseite einer Getriebestufe im Radinneren angeordnet ist.

Von diesem Stand der Technik ausgehend liegt der vorliegenden Erfindung die Aufgabe zugrunde, einen verbesserten Fahrantrieb für Lastkraftwagen der eingangs genannten Art zu schaffen, der Nachteile des Standes der Technik vermeidet und letzteren in vorteilhafter Weise weiterbildet. Vorzugsweise soll ein konstruktiv verbesserter Aufbau des Fahrantriebs erreicht werden.

Erfindungsgemäß ist zur Lösung dieser Aufgabe ein Fahrantrieb gemäß Anspruch 1 vorgesehen. Bevorzugte Ausgestaltungen der Erfindung sind Gegenstand der abhängigen Ansprüche.

Erfindungsgemäß ist also für jedes Rad der Räderpaare eine Einzelradbremse vorgesehen, die auf einer der jeweiligen Schwinge abgewandten Außenseite des jeweiligen Elektromotors und/oder der jeweiligen Getriebestufe angeordnet ist und zusammen mit dem jeweiligen Elektromotor und der jeweiligen Getriebestufe im Inneren der jeweiligen Radnabe sowie der zugehörigen Radachse angeordnet ist. Die außenseitige Anordnung der Bremsen im Inneren der Radnabe bewirkt eine geschützte Anordnung der Betriebskomponenten sowie einen kompakten Aufbau des Fahrantriebs. Die Elektromotoren mit den zugehörigen Getriebestufen liegen innenseitig zu der jeweiligen Schwinge hin, während die Bremsen auf der Außenseite der Antriebseinheiten liegen. Dabei sind die Elektromotoren jeweils in einem zentralen Motorgehäuse aufgenommen, das mit der jeweiligen Schwinge starr verbunden ist und an das ein Getriebegehäuse angeflanscht ist. Das Getriebegehäuse ist gleichzeitig als Radachse ausgebildet und trägt drehbar die zugehörige Radnabe, wobei ein feststehender Teil der Bremsen an der Radachse befestigt ist.

Um in dem begrenzten Innenraum der Radachse bzw. -nabe dennoch ein großes Übersetzungsverhältnis erreichen zu können, ist in Weiterbildung der Erfindung als Getriebestufe ein Planetengetriebe vorgesehen, das die Antriebsbewegung der Elektromotoren vom Schnellen ins Langsame übersetzt. Insbesondere kann eine doppelte Planetengetriebestufe mit einer Übersetzung im Bereich von 20 bis 40 vom Schnellen ins Langsame vorgesehen sein. Wird mit den Elektromotoren bei Drehzahlen von größenordnungsmäßig 3500 Umdrehungen pro Minute gearbeitet, können an den Rädern Drehzahlen von etwa 100 Umdrehungen pro Minute erzielt werden.

Vorzugsweise sind der Elektromotor und die Getriebestufe mit ihren sämtlichen Drehachsen parallel zur Drehachse der jeweiligen Radnabe angeordnet. Der Elektromotor sitzt mit seiner Drehachse vorzugsweise koaxial zur Drehachse der entsprechenden Radnabe und treibt einen ersten Planetenradträger an, der wiederum über eine weitere Übersetzungsstufe die Radnabe antreibt.

Die Radachse, an der die Radnabe drehbar gelagert ist, wird von einem Gehäuse des Elektromotors bzw. einem Gehäuse der Getriebestufe gebildet. Dabei können das Motorgehäuse und das Getriebegehäuse separat ausgebildet sein. Die Elektromotoren sind jeweils in einem zentralen Motorgehäuse aufgenommen, das mit der jeweiligen Schwinge starr verbunden ist und an das ein Getriebegehäuse angeflanscht ist. Das Getriebegehäuse bildet gleichzeitig die Radachse, die die zugehörige Radnabe drehbar lagert. Diese Doppelfunktion des Getriebegehäuses bewirkt einen gewichtssparenden Aufbau und nutzt die gegebenen Platzverhältnisse hervorragend aus.

Die im Inneren der Radnabe angeordneten Bremsen, die grundsätzlich von den Antriebseinheiten separat ausgebildet sind, besitzen in an sich bekannter Weise einen feststehenden Teil sowie einen sich mitdrehenden Teil. Dabei ist der feststehende Teil der Bremsen an einer Stirnseite der Radachsen, insbesondere an der Stirnseite der Getriebegehäuse, befestigt. Der mitdrehende Teil der Bremsen könnte grundsätzlich an der Radnabe befestigt sein. Vorzugsweise jedoch ist der feststehende Teil an einem Getriebestufenelement befestigt und dreht sich gegenüber der Radnabe mit übersetzter Geschwindigkeit. Insbesondere kann der mitdrehende Teil der Bremsen an den Planetenträger, der von der Motorwelle angetrieben wird, angekoppelt sein und sich mit dessen Geschwindigkeit drehen. Die gegenüber der Radnabe übersetzte Geschwindigkeit des mitdrehenden Teils der Bremsen erlaubt besonders effektives Bremsen.

Die Bremsen selbst können verschieden ausgebildet sein. Nach einer bevorzugten Ausführung der Erfindung können die Bremsen als Scheibenbremse ausgebildet sein. Eine alternative Ausführungsform der Bremsen besteht darin, dass Lamellenbremsen vorgesehen sind.

Vorzugsweise weist jede der Bremsen jeweils eine Betriebsbremse sowie eine Parkbremse auf, die vorzugsweise auf eine gemeinsame Bremsscheibe einwirken bzw. gemeinsame Bremslamellen aufweisen.

Um zu verhindern, dass ein defekter Einzelradantrieb das ganze Fahrzeug blockiert, ist in bevorzugter Weiterbildung der Erfindung vorgesehen, dass die Getriebestufe ein axial ausrückbares Getriebeelement, insbesondere ein axial verschiebbares Zahnrad zur Unterbrechung des Kraftflusses in der Getriebestufe aufweist. Hierdurch kann das jeweilige Rad quasi ausgekuppelt werden. Wenn der Elektromotor blockiert, kann das Fahrzeug mit den verbleibenden Einzelradantrieben dennoch weiterfahren. Es versteht sich, dass das Getriebeelement den Kraftfluss an einer Stelle unterbricht, die den Kraftfluss von der Bremse auf die Radnabe unberührt lässt. Wie oben beschrieben, kann der mitdrehende Teil der Bremse an einem Getriebestufenelement befestigt sein. Die Unterbrechung des Kraftflusses in der Getriebestufe erfolgt zur Seite des Elektromotors hin, während der Kraftfluss von der Bremse auf die Radnabe auch im ausgerückten Zustand des verschieblichen Getriebeelements erhalten bleibt.

Die Erfindung wird nachfolgend anhand bevorzugter Ausführungsbeispiele und zugehöriger Zeichnungen näher erläutert. In den Zeichnungen zeigen:
- Fig. 1: eine schematische Darstellung des Fahrwerks eines Schüttgutkippers vom Large Dump Truck-Typ mit einem Fahrantrieb nach einer bevorzugten Ausführung der Erfindung,
- Fig. 2: eine vergrößerte Darstellung eines Hinterradpaares aus Fig. 1, das an einer am Fahrzeugrahmen beweglich gelagerten Schwinge rechts und links von dieser montiert ist, wobei jedes Rad separat von einem Einzelradantrieb angetrieben ist und die Einzelradantriebe durch die Schwinge mit Kühlluft versorgt werden,
- Fig. 3: eine vergrößerte Darstellung eines Hinterradpaares ähnlich Fig. 2 nach einer alternativen Ausführung der Erfindung, wonach die Einzelradantriebe durch Kühlmittelleitungen im Inneren der Schwinge mit Kühlmittel versorgt werden,
- Fig. 4: eine vergrößerte Schnittansicht eines Einzelradantriebs eines Hinterrades aus den vorhergehenden Figuren, der die Anordnung eines Elektromotors, einer Planetengetriebestufe sowie der Radbremse zeigt, wobei als Bremse eine Scheibenbremse vorgesehen ist, und
- Fig. 5: eine Schnittansicht des Einzelradantriebs eines Hinterrades aus den vorhergehenden Figuren in einer Darstellung ähnlich Figur 4, wobei als Bremse eine Lamellenbremse vorgesehen ist.

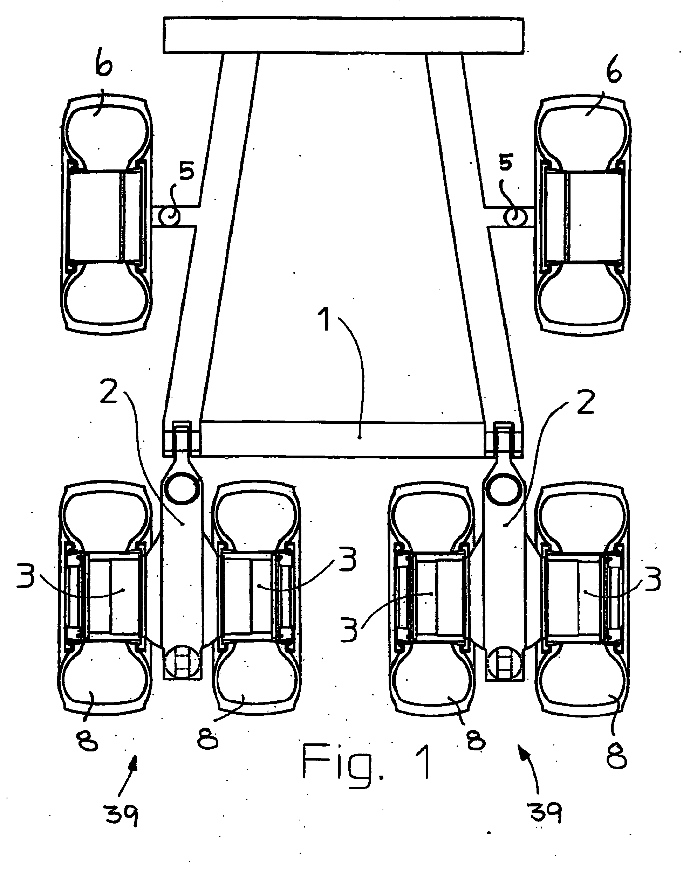

Das in Figur 1 gezeigte Fahrwerk eines sogenannten Large Dump Trucks umfasst einen starren Fahrzeugrahmen 1, an dem zwei um jeweils eine vertikale Achse 5 steuerbare Vorderräder 6 angelenkt sind. An einem rückwärtigen Abschnitt des Fahrzeugrahmens 1 sind ein Paar parallele, nach hinten auskragende Schwingen 2 angelenkt, die relativ zu dem Fahrzeugrahmen 1 um eine sich quer zur Fahrtrichtung erstreckende, horizontale Achse schwenkbar und in geeigneter Weise abgestützt sind, wie dies die WO 92/04196 zeigt. Die beiden Schwingen 2 tragen jeweils ein Paar Hinterräder 8. Wie Figur 1 zeigt, erstrecken sich die Schwingen 2 jeweils zwischen einem Paar der Hinterräder 8, die rechts und links an der jeweiligen Schwinge 2 montiert sind. Die vier Hinterräder 8 bilden die Antriebsachse des Fahrzeugs. Wie Figur 1 zeigt, ist dabei jedem der Hinterräder 8 ein Einzelradantrieb 3 zugeordnet, so dass die Hinterräder 8 unabhängig voneinander und mit unterschiedlicher Drehzahl angetrieben werden können, was insbesondere bei engen Kurvenfahrten von Vorteil ist und ein Radieren der Räder aufgrund unterschiedlicher Kurvenbahnen verhindert.

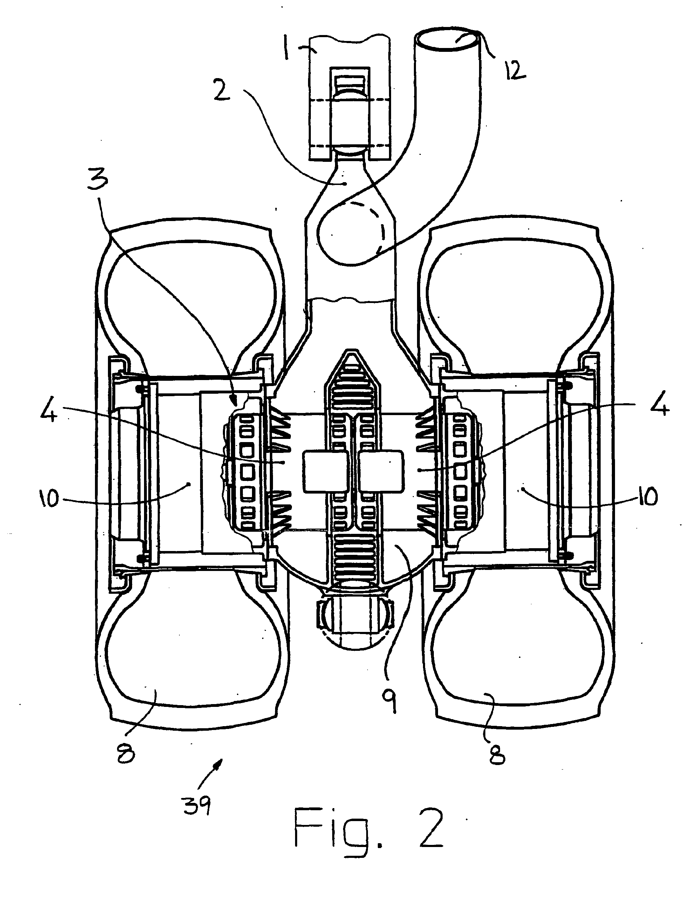

Wie Figur 2 zeigt, sind die Einzelradantriebe in das Innere der Schwinge bzw. der daran befestigten Radachsen und Radnaben integriert. Jede der Schwingen 2 erweitert sich zur Achse der Räder 8 hin und bildet ein zentrales Motorgehäuse 9 aus, in dem zwei separate Elektromotoren 4 aufgenommen sind, die beide koaxial zur Drehachse der beiden an der Schwinge 2 befestigten Hinterräder 8 angeordnet sind. Das integral einstückig an die Schwinge 2 angeformte Motorgehäuse 9 besitzt zwei zu den Rädern hin gewandte Öffnungen. Im Bereich dieser Öffnungen sind an das Motorgehäuse 9 zwei gegenüberliegende Getriebegehäuse 10 angeflanscht, die im wesentlichen topfförmig ausgebildet sind und gleichzeitig die Radachsen für die beiden Hinterräder 8 bilden. Auf den Getriebegehäusen 10 sind drehbar die Radnaben 16 befestigt, die die Hinterräder 8 tragen und noch näher beschrieben werden.

Wie Figur 2 zeigt, werden die Elektromotoren 4 im Inneren des Motorgehäuses 9 luftgekühlt. Die Kühlluft wird durch das Innere der Schwinge 2 zugeführt, die im Inneren einen Kühlluftkanal aufweist bzw. als Kühlluftkanal ausgebildet ist.

Vorzugsweise zirkuliert die Kühlluft durch die Schwinge 2 und das Motorgehäuse 9. Hierzu sind geeignete Einlass- und Auslasskanäle vorgesehen. Figur 2 zeigt hier den Einlasskanal 12, durch den die Kühlluft zugeführt werden kann.

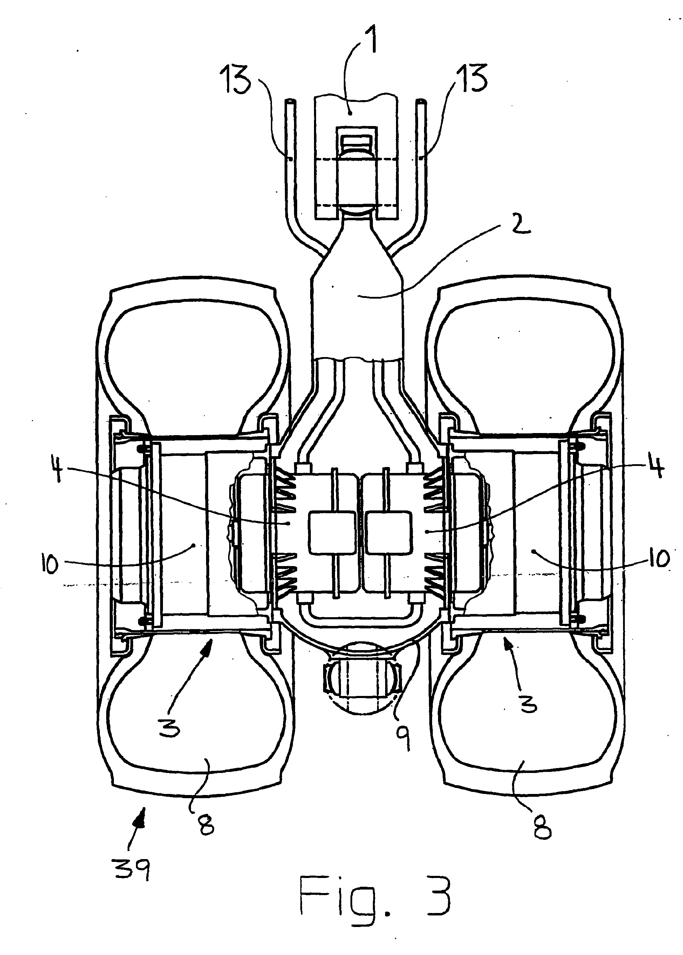

In alternativer Ausbildung der Erfindung können die Elektromotoren 4 auch flüssigkeitsgekühlt sein. Zweckmäßigerweise sind auch hier die Kühlmittelkanäle im Inneren der Schwinge 2 geführt. Wie Figur 3 zeigt, treten die Kühlmittelkanäle 13 in unmittelbarer Nachbarschaft des Anlenkpunktes der Schwinge 2 aus der Schwinge 2 heraus und sind von dort zum Fahrzeugrahmen 1 geführt. Das Kühlmittel wird auch hier zirkuliert. Eine der Kühlmittelleitungen 13 dient als Kühlmittelzufuhr und führt zu den Elektromotoren, während die andere der beiden Kühlmittelleitungen 13 als Kühlmittelabfuhr dient. Die beiden Elektromotoren können bezüglich des Kühlmittelkreislaufes in Reihe hintereinander geschaltet sein.

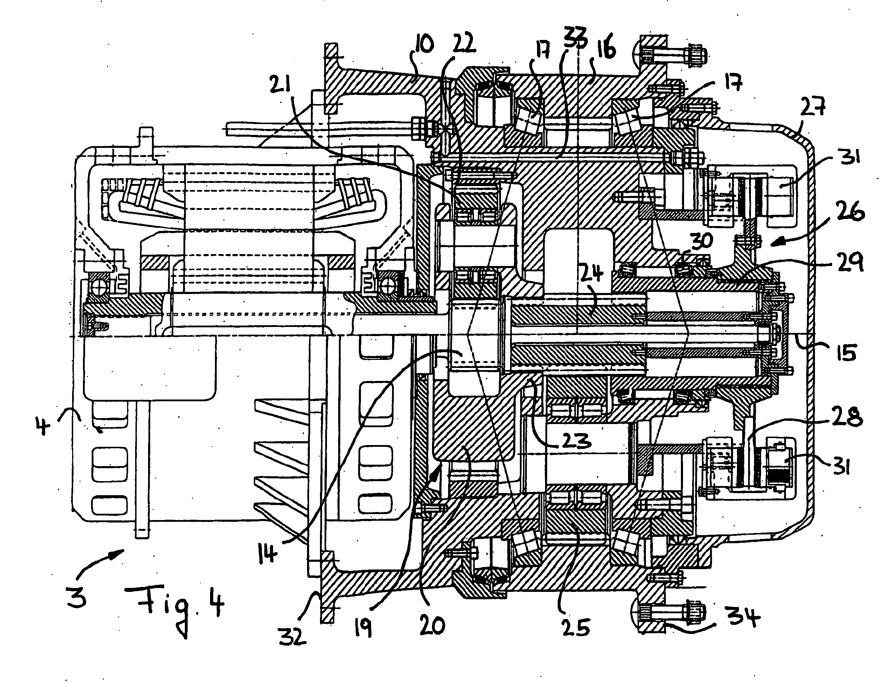

Den näheren Aufbau eines jeden Einzelradantriebs und der einem jeden Rad zugeordneten Bremse zeigt Figur 4. Der Elektromotor 4, der vorzugsweise ein frequenzgeregelter Asynchronmotor sein kann, ist mit seiner Motorwelle 14 koaxial zur Drehachse 15 des jeweiligen Rads angeordnet, wobei die Motorwelle 14 zur Außenseite hin, d. h. von der Schwinge 2 weg durch die entsprechende Motorgehäuseöffnung 9 hindurch in das Getriebegehäuse 10 hineinragt. Das genannte Getriebegehäuse 10 ist im wesentlichen rotationssymmetrisch ausgebildet und verjüngt sich zur Außenseite, d. h. von der Schwinge weg, stufenförmig auf einen geringeren Durchmesser. Auf dem Außenumfang des Getriebegehäuses 10, insbesondere auf dessen Abschnitt mit reduziertem Durchmesser, sitzt drehbar gelagert die Radnabe 16. Sie ist an dem Motorgehäuse 9 über zwei schräg gestellte Zylinderrollenlager 17 abgestützt.

Im Inneren des Motorgehäuses 9 ist ein zweistufiges Planetengetriebe 19 vorgesehen. Ein Planetenträger 20 sitzt koaxial über der Motorwelle 14 und trägt eine Mehrzahl von Planetenrädern 21, die an dem Planetenträger 20 drehbar gelagert sind. Die Planetenräder 21 stehen einerseits mit der verzahnten Motorwelle 14 des Elektromotors 4 in Eingriff. Andererseits stehen sie mit einem Zahnkranz 22 in Eingriff, der getriebegehäusefest angeordnet ist und den Planetenradträger 20 koaxial umgibt. Über die Planetenräder 21 wird der Planetenträger 20 von der Motorwelle 14 des Elektromotors 4 angetrieben. Wie Figur 4 zeigt, besitzt der Planetenradträger 20 einen axial über die Motorwelle 4 vorspringenden Verzahnungsansatz 23, der mit einer koaxial zur Drehachse des Rades 8 angeordneten Hülse 24 in Eingriff steht. Wie Figur 4 zeigt, besitzt die Hülse 24 eine Außenverzahnung, mit der sie in einer Innenverzahnung des Verzahnungsansatzes 23 sitzt. Die Hülse 24 dreht sich also mit dem Planetenradträger 21.

Über die Hülse 24 treibt der Planetenradträger 20 einen weiteren Satz von Planetenrädern 25 an, die um die Drehachse 15 herum verteilt angeordnet sind und drehbar an dem Getriebegehäuse 10 gelagert sind. Die Zahnräder 25 kämmen einerseits mit der Hülse 24. Andererseits stehen sie mit einer Innenverzahnung der Radnabe 16 in Eingriff, so dass sie die Radnabe 16 antreiben. Wie Figur 4 zeigt, ist die Innenverzahnung der Radnabe 16 zwischen den beiden Wälzlagern 17 am Innenumfang der Radnabe vorgesehen.

Die zweistufige Ausbildung des Planetengetriebes 19 zwischen dem Elektromotor 4 und der Radnabe 16 bewirkt auf kleinstem Raum ein großes Übersetzungsverhältnis. In der gezeichneten Ausführungsform ist ein Übersetzungsverhältnis von ca. 30 bis 35 vorgesehen, d. h. die Drehzahl des Elektromotors 4 ist 30 bis 35 Mal so groß wie die Ausgangsdrehzahl der Radnabe 16.

Die Bremse 26 ist in der Ausführung gemäß Figur 4 als Scheibenbremse ausgebildet. Die Bremse 26 sitzt außenseitig, d. h. auf der der Schwinge 2 abgewandten Seite des Planetengetriebes 19. Sie ist innerhalb des Innenumfangs der Radnabe 16 angeordnet. Wie Figur 4 zeigt, wird sie von einem Radnabendeckel 27, der stirnseitig mit der Radnabe 16 verbunden ist, eingeschlossen.

Eine Bremsscheibe 28 bildet das mitdrehende Teil der Bremse. Die Bremsscheibe 28 ist jedoch nicht unmittelbar an der Radnabe 16 befestigt, sondern dreht sich mit der Geschwindigkeit des Planetenradträgers 20. Wie Figur 4 zeigt, sitzt die Bremsscheibe 28 drehfest auf einem hülsenförmigen Bremsscheibenträger 29, der an dem Getriebegehäuse 10 über zwei schräg gestellte Wälzlager 30 drehbar gelagert ist und mit der Hülse 24 in Eingriff steht. Der Bremsscheibenträger 29, der koaxial zur Drehachse 15 der Räder angeordnet ist, besitzt eine Innenverzahnung, die auf der Außenverzahnung der Hülse 24 sitzt.

Den feststehenden Teil der Bremse 26 bilden Bremsbacken 31, die an der Stirnseite des Getriebegehäuses 10 angeschraubt sind. Es sind vorzugsweise mehrere Bremsbacken vorgesehen, insbesondere Betriebsbremsbacken sowie Parkbremsbacken, die auf die gemeinsame Bremsscheibe 28 einwirken.

Das Getriebegehäuse 10, das in Figur 4 gezeigt ist, sitzt mit seinem innenseitigen Flansch 32 auf dem Motorgehäuse 9, das starr an der Schwinge 2 befestigt ist bzw. von dieser gebildet wird, wie Figur 2 zeigt. Die Betätigung der Bremse 26 erfolgt vorzugsweise hydraulisch. Wie Figur 4 zeigt, sind in das Getriebegehäuse 10 Hydraulikkanäle 33 eingearbeitet, die eine Hydraulikleitung 34 im Inneren des Motorgehäuses 9 mit dem Innenraum der Radnabe 16, insbesondere des Radnabendekkels 27, verbinden, so dass die Bremsbacken entsprechend angeschlossen werden können.

Die Befestigung der Räder an der Radnabe 16 erfolgt in an sich bekannter Weise über einen Radnabenflansch 34 und entsprechende Schraubbolzenverbindungen.

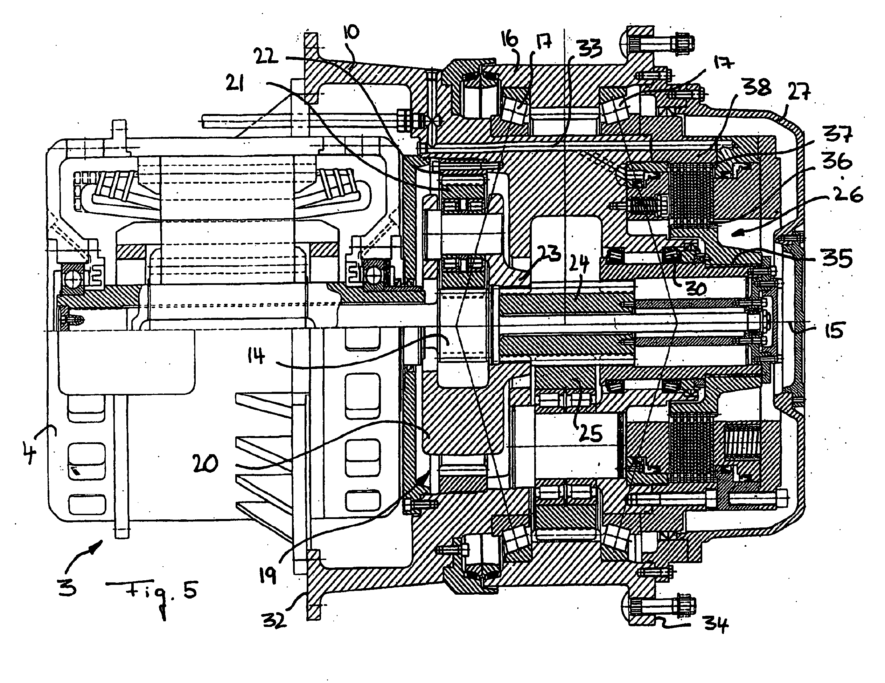

Figur 5 zeigt eine alternative Ausbildung der Bremse 26. Im übrigen entspricht der Aufbau des Einzelradantriebs dem der Figur 4, so dass insoweit auf deren Beschreibung verwiesen werden kann. Die Bremse 26 gemäß Figur 5 ist als Lamellenbremse ausgebildet. Einerseits ist ein mitdrehender Lamellenträger 35 vorgesehen. Dieser ist ähnlich dem zuvor beschriebenen Bremsscheibenträger 29 nicht unmittelbar mit der Radnabe, sondern mit dem Planetenradträger gekoppelt. Insbesondere steht der Lamellenträger 35 mit der Hülse 24 in Eingriff. Der Lamellenträger 35 besitzt hierzu einen Hülsenabschnitt 36, der über Wälzlager 30 an dem Getriebegehäuse 10 drehbar gelagert ist und mit einer Innenverzahnung auf der Außenverzahnung der Hülse 24 sitzt. Radial außerhalb des Lamellenträgers 35 trägt dieser einen Satz sich mitdrehender Bremslamellen 36. Zwischen den sich mitdrehenden Bremslamellen 36 sind stillstehende Bremslamellen 37 angeordnet, die von einem Lamellenträger 38 drehfest gehalten werden. Wie Figur 5 zeigt, ist der sich nicht mitdrehende Lamellenträger 38 stirnseitig an dem Getriebegehäuse 10 festgeschraubt. Die axial hintereinander angeordneten, ringförmigen Bremslamellen 36 und 37 können in an sich bekannter Weise durch Hydraulikdruck aneinandergepresst werden. Die Hydraulikversorgung erfolgt hierbei ebenfalls durch einen sich durch das Getriebegehäuse 10 erstreckenden Hydraulikkanal 33.

Um die Radnabe auskuppeln zu können, kann die Getriebestufe 19 ein außer Eingriff bringbares, insbesondere axial verschiebliches Getriebeelement besitzen. Insbesondere kann vorgesehen sein, dass die Hülse 24 mit der Außenverzahnung axial verschieblich gelagert ist. Beispielsweise kann vorgesehen sein, dass die Hülse 24 gemäß Figur 4 und 5 ein Stück weit nach rechts verschoben werden kann, so dass sie von dem Verzahnungsansatz 23 des Planetenradträgers 20 außer Eingriff gerät. Hierdurch kann sich die Radnabe gegenüber dem Planetenradträger 20 und damit gegenüber dem Elektromotor 4 drehen. Andererseits bleibt die Bremse mit der Radnabe noch in Eingriff.

## Patentansprüche

1. Fahrantrieb für Lastkraftwagen, insbesondere Schüttgutkipper vom Large Dump Truck-Typ, mit mehreren, eine angetriebene Radachse bildenden Räderpaaren (39), die jeweils von einer separaten Schwinge (2) gelagert sind, die sich zwischen den Rädern (8) des jeweiligen Räderpaares (39) erstreckt und auf gegenüberliegenden Seiten zwei Radnaben (16) trägt, an denen die Räder (8) befestigbar sind, wobei für jedes Rad (8) der Räderpaare (39) ein Einzelradantrieb (3) bestehend aus einem Elektromotor (4) und einer Getriebestufe (19), die die Antriebsbewegung des Elektromotors (4) auf die jeweilige Radnabe (16) überträgt, vorgesehen ist, **dadurch gekennzeichnet, dass** für jedes Rad (8) der Räderpaare (39) eine Einzelradbremse (26) vorgesehen ist, die auf einer der jeweiligen Schwinge (2) abgewandten Außenseite des jeweiligen Elektromotors (4) und/oder der jeweiligen Getriebestufe (19) angeordnet ist und zusammen mit dem jeweiligen Elektromotor (4) und der jeweiligen Getriebestufe (19) im Inneren der jeweiligen Radnabe (16) und der zugehörigen Radachse (11) angeordnet ist, wobei die Elektromotoren (4) jeweils in einem zentralen Motorgehäuse (9) aufgenommen sind, das mit der jeweiligen Schwinge (2) starr verbunden ist und an das ein Getriebegehäuse (10) angeflanscht ist, wobei das Getriebegehäuse (10) gleichzeitig als Radachse ausgebildet ist und drehbar die zugehörige Radnabe trägt, und wobei ein feststehender Teil (31; 37, 38) der Bremsen (26) an der Radachse (11) befestigt ist.

2. Fahrantrieb nach dem vorhergehenden Anspruch, wobei als Getriebestufe ein Planetengetriebe (19), insbesondere eine doppelte Planetengetriebestufe mit einer Übersetzung im Bereich von 20 bis 40 vorgesehen ist.

3. Fahrantrieb nach einem der vorhergehenden Ansprüche, wobei der Elektromotor koaxial zur Drehachse (15) der jeweiligen Radnabe (16) angeordnet ist.

4. Fahrantrieb nach einem der vorhergehenden Ansprüche, wobei die Radnabe (16) auf einer Getriebegehäusemantelfläche gelagert ist.

5. Fahrantrieb nach einem der vorhergehenden Ansprüche, wobei die Getriebestufe (19) ein axial ausrückbares Getriebeelement (24), insbesondere ein axial verschiebbares Zahnrad, zur Unterbrechung des Kraftflusses in der Getriebestufe aufweist.

6. Fahrantrieb nach einem der vorhergehenden Ansprüche, wobei ein feststehender Teil (31; 37, 38) der Bremsen (26) an einer Stirnseite der Radachsen, insbesondere der Getriebegehäuse (10) befestigt ist und ein mitdrehender Teil (28; 36) der Bremsen (26) an einem Getriebestufenelement (24), dessen Drehzahl vorzugsweise gegenüber der Drehzahl der Radnabe (16) übersetzt ist, angekoppelt ist.

7. Fahrantrieb nach einem der vorhergehenden Ansprüche, wobei die Einzelradbremsen (26) jeweils eine Betriebsbremse und eine Parkbremse aufweisen.

8. Fahrantrieb nach einem der vorhergehenden Ansprüche, wobei die Einzelradbremsen (26) als Scheibenbremsen ausgebildet sind.

9. Fahrantrieb nach einem der vorhergehenden Ansprüche 1 bis 7, wobei die Einzelradbremsen (26) als vorzugsweise nasslaufende Lamellenbremsen ausgebildet sind.

10. Fahrantrieb nach einem der vorhergehenden Ansprüche, wobei den Elektromotoren (4) eine Flüssigkeitskühlung (13) zugeordnet ist, die in den und/oder an den Schwingen (2) entlanggeführte Kühlmittelleitungen (13) aufweist.

## Claims

1. Travel drive for commercial vehicles, in particular bulk material tippers of the large dump truck type, having a plurality of wheel pairs (39) which form a driven wheel axle and are each mounted by means of a separate rocker (2) which extends between the wheels (8) of the respective wheel pair (39) and supports two wheel hubs (16) at opposite sides, to which wheel hubs (16) the wheels (8) can be fastened, each wheel (8) of the wheel pairs (39) being provided with an individual wheel drive (3) comprising an electric motor (4) and a transmission stage (19) which transmits the drive movement of the electric motor (4) to the respective wheel hub (16), **characterized in that** each wheel (8) of the wheel pairs (39) is provided with an individual wheel brake (26) which is arranged on an outer side, which faces away from the respective rocker (2), of the respective electric motor (4) and/or of the respective transmission stage (19), and is arranged together with the respective electric motor (4) and the respective transmission stage (19) in the interior of the respective wheel hub (16) and of the associated wheel axle (11), the electric motors (4) each being held in a central motor housing (9) which is rigidly connected to the respective rocker (2) and onto which is integrally flanged a transmission housing (10), the transmission housing (10) simultaneously being embodied as a wheel axle and rotatably supporting the associated wheel hub, and a fixed part (31; 37, 38) of the brakes (26) being fastened to the wheel axle (11).

2. Travel drive according to the preceding claim, a planetary gear set (19), in particular a dual planetary gear stage with a transmission ratio in the range from 20 to 40, being provided as a transmission stage.

3. Travel drive according to one of the preceding claims, the electric motor being arranged coaxially with respect to the rotational axis (15) of the respective wheel hub (16).

4. Travel drive according to one of the preceding claims, the wheel hub (16) being mounted on a transmission housing lateral surface.

5. Travel drive according to one of the preceding claims, the transmission stage (19) having a transmission element (24) which can be disengaged axially, in particular an axially displaceable gearwheel, for interrupting the force flow in the transmission stage.

6. Travel drive according to one of the preceding claims, a fixed part (31; 37, 38) of the brakes (26) being fastened to an end side of the wheel axles, in particular of the transmission housing (10), and a concomitantly rotating part (28; 36) of the brakes (26) being coupled to a transmission stage element (24) whose rotational speed is preferably stepped up in relation to the rotational speed of the wheel hub (16).

7. Travel drive according to one of the preceding claims, the individual wheel brakes (26) each having a service brake and a parking brake.

8. Travel drive according to one of the preceding claims, the individual wheel brakes (26) being embodied as disc brakes.

9. Travel drive according to one of Claims 1 to 7, the individual wheel brakes (26) being embodied as preferably wet-running multi-plate brakes.

10. Travel drive according to one of the preceding claims, the electric motors (4) being assigned a liquid cooling arrangement (13) which has coolant lines (13) which are guided along in and/or on the rockers (2).

## Revendications

1. Système d'entraînement pour camion, en particulier camion à benne basculante pour produits en vrac du type Large Dump Truck, comprenant plusieurs paires de roues (39) formant un essieu de roue entraîné, qui sont supportées chacune par une coulisse (2) séparée, laquelle s'étend entre les roues (8) de la paire de roues (39) respective et porte sur des côtés opposés deux moyeux de roue (16) sur lesquels les roues (8) peuvent être fixées, un entraînement à roues individuelles (3) constitué d'un moteur électrique (4) et d'un étage de boîte de vitesses (19), lequel transmet le mouvement de transmission du moteur électrique (4) au moyeu de roue (16) concerné, étant prévu pour chaque roue (8) des paires de roues (39), **caractérisé en ce que**, pour chaque roue (8) des paires de roues (39), il est prévu un frein de roue individuelle (26) qui est disposé sur un côté extérieur, opposé à la coulisse (2) concernée, du moteur électrique (4) respectif et/ou de l'étage de boîte de vitesses (19) respectif et est disposé en même temps que le moteur électrique (4) concerné et l'étage de boîte de vitesses (19) concerné à l'intérieur du moyeu de roue (16) concerné et l'essieu de roue (11) concerné, les moteurs électriques (4) étant réceptionnés respectivement dans un carter de moteur (9) central, qui est relié de façon rigide à la coulisse (2) respective et auquel est raccordé par brides un carter de boîte de vitesses (10), le carter de boîte de vitesses (10) étant conçu en même temps comme essieu de roue et portant de façon rotative le moyeu de roue concerné, et une partie (31; 37, 38) fixe des freins (26) étant fixée sur l'essieu de roue (11).

2. Système d'entraînement selon la revendication précédente, un engrenage planétaire (19), en particulier un double niveau d'engrenage planétaire avec une transmission de l'ordre de 20 à 40 étant prévu comme étage de boîte de vitesses.

3. Système d'entraînement selon l'une quelconque des revendications précédentes, le moteur électrique étant disposé sur le même axe de l'axe de rotation (15) du moyeu de roue concerné (16).

4. Système d'entraînement selon l'une quelconque des revendications précédentes, le moyeu de roue (16) étant logé sur une surface d'enveloppe du carter de boîte de vitesses.

5. Système d'entraînement selon l'une quelconque des revendications précédentes, l'étage de boîte de vitesses (19) présentant un élément de boîte de vitesses (24) débrayable axialement, en particulier une roue dentée coulissante axialement, pour l'interruption du flux de force dans l'étage de boîte de vitesses.

6. Système d'entraînement selon l'une quelconque des revendications précédentes, une partie (31; 37, 38) fixe des freins (26) étant fixée sur un côté avant des essieux de roue, en particulier des carters de boîte de vitesses (10) et une partie rotative (28; 36) rotative des freins (26) étant couplée à un élément d'étage de boîte de vitesses (24), dont le régime est multiplié de préférence par rapport au régime du moyeu de roue (16).

7. Système d'entraînement selon l'une quelconque des revendications précédentes, les freins de roue individuels (26) présentant chacun un frein de service et un frein de stationnement.

8. Système d'entraînement selon l'une quelconque des revendications précédentes, les freins de roue individuels (26) étant conçus comme des freins à disque.

9. Système d'entraînement selon l'une quelconque des revendications 1 à 7 précédentes, les freins de roue individuelle (26) étant conçus comme des freins à lamelles, de préférence à fonctionnement humide.

10. Système d'entraînement selon l'une quelconque des revendications précédentes, un refroidissement par liquide (13), qui présente des conduites de réfrigérant (13) guidées dans les coulisses et/ou le long les coulisses (2), étant attribué aux moteurs électriques (4).
